# DEMANDE DE BREVET EUROPEEN

(11) **EP 2 498 101 A1**
(43) Date de publication de la demande: **12.09.2012**
(21) Numéro de dépôt: 12001263.8
(22) Date de dépôt: 27.02.2012
(51) Int. Cl.: G01S 13/88, G01S 13/94, G01S 13/93, G01S 13/87, G01S 13/91, G01S 7/03

(54) **Procédé de mesure de hauteur et de détection d' obstacle, radioaltimètre et aéronef**

(30) Priorité: 11.03.2011 FR 1100733
(71) Demandeur: EUROCOPTER, 13725 Marignane Cédex (FR)
(72) Inventeur: Dutruc, Hervé, 13820 Ensues La Redonne (FR)
(74) Mandataire: GPI & Associés

(57) **Abrégé**

La présente invention concerne un radioaltimètre (5) muni d'un générateur-récepteur (10) de signaux ainsi que d'un moyen d'émission-réception (20) d'un signal relié au générateur-récepteur (10) et d'un organe d'affichage (30), ledit moyen d'émission-réception (20) comprenant un organe principal (21) d'émission-réception pour envoyer un signal vers un sol (S) afin de déterminer la hauteur (H) séparant ledit organe principal (21) dudit sol (S), ledit organe d'affichage (30) ayant un moyen d'affichage principal (31) de ladite hauteur (H). De plus, le radioaltimètre (5) comporte un moyen de commutation (40) ainsi qu'une unité de contrôle (50) et un moyen d'affichage secondaire (32) dudit organe d'affichage (30).

## Description

La présente invention concerne un procédé de mesure d'une hauteur et de détection d'obstacle, un radioaltimètre et un aéronef.

L'invention se situe donc dans le domaine technique de la détection d'obstacle à bord d'un aéronef.

Un aéronef est usuellement muni d'une pluralité d'instruments de vol. Parmi ces instruments de vol, on connaît le radioaltimètre qui permet de déterminer la hauteur séparant l'aéronef du sol survolé.

Un tel radioaltimètre peut comprendre un générateur-récepteur de signaux tels que des ondes radioélectriques, le générateur-récepteur de signaux coopérant avec un moyen d'émission-réception d'un signal et un moyen d'affichage. Le moyen d'émission-réception peut comporter soit une antenne apte à émettre et recevoir un signal, soit deux antennes à savoir une première antenne pour émettre un signal et une deuxième antenne pour recevoir un signal.

Dès lors, le générateur-récepteur émet un signal dirigé vers le sol par le biais du moyen d'émission-réception. Ce signal est réfléchi par le sol puis capté par le moyen d'émission-réception qui en informe le générateur-récepteur. A partir de la vitesse de propagation connue du signal ainsi que la durée du trajet de ce signal du moyen d'émission-réception vers le sol puis du sol vers le moyen d'émission-réception, le générateur-récepteur déduit la hauteur de l'aéronef.

Certains radioaltimètres peuvent déclencher une alarme en fonction de la hauteur mesurée.

Le radioaltimètre est donc un instrument très utile. Toutefois, cet instrument n'est pas fait pour détecter des obstacles autres que le terrain survolé.

On connaît divers dispositifs ayant pour fonction de détecter des obstacles.

Par exemple, le document FR 2 908 547 suggère d'utiliser des capteurs radars transmettant cycliquement des signaux à une unité centrale, les signaux étant présentés sur un afficheur après comparaison avec des seuils d'avertissement prédéfinis.

Le document JP 2008014643 vise aussi la détection d'objet par onde radar.

Le document EP 1 617 243 présente un dispositif radar d'automobile visant à réduire les perturbations provoquées par le sol.

Le document FR 2 773 609 présente un dispositif d'aide à la navigation aérienne muni d'un radioaltimètre fournissant la hauteur d'un aéronef.

Le document FR 2 297 466 a par ailleurs pour objet un dispositif d'alarme de vitesse excessive de descente utilisant un radioaltimètre pour mesurer l'altitude par rapport au sol.

Le document US 2010/0299067 divulgue un dispositif pour éviter une collision utilisant un radar à fréquences radioélectriques.

Ainsi, l'état de la technique précité présente un radioaltimètre pour mesurer la hauteur d'un véhicule par rapport au sol, ainsi que différents dispositifs pour détecter et localiser des obstacles afin d'indiquer de façon synthétique la distance séparant l'appareil desdits obstacles.

La présente invention a alors pour objet de proposer un dispositif permettant d'éviter la multiplication d'équipements.

Selon l'invention, un radioaltimètre est muni d'un générateur-récepteur de signaux, de type onde radioélectrique par exemple, ainsi que d'un moyen d'émission-réception d'un signal relié au générateur-récepteur et d'un organe d'affichage. Le moyen d'émission-réception comprend un organe principal d'émission-réception pour envoyer un signal vers un sol afin de déterminer la hauteur séparant l'organe principal du sol, l'organe d'affichage ayant un moyen d'affichage principal de la hauteur. Le générateur-récepteur est éventuellement un générateur-récepteur d'un type connu et mis en oeuvre par les radioaltimètres existants.

Ce radioaltimètre est notamment remarquable en ce qu'il comporte un moyen de commutation ainsi qu'une unité de contrôle et un moyen d'affichage secondaire de l'organe d'affichage, le moyen d'émission-réception comportant au moins un organe secondaire d'émission-réception pour détecter un obstacle autre que le sol survolé, ledit aéronef étant situé à l'aplomb dudit sol, l'organe principal et chaque organe secondaire étant reliés au moyen de commutation. Un organe d'évaluation des obstacles détectés détermine un niveau de dangerosité de chaque obstacle détecté, l'organe d'affichage comprenant un moyen d'affichage secondaire pour afficher au moins une information relative à l'obstacle détecté présentant le niveau de dangerosité le plus élevé, l'unité de contrôle étant reliée au moyen de commutation pour mettre en liaison l'organe principal et chaque organe secondaire avec le générateur-récepteur de signaux selon un cycle prédéterminé modifiable et pour modifier ledit cycle si un obstacle est détecté.

Par conséquent, ce radioaltimètre peut non seulement mesurer la hauteur séparant un aéronef du sol survolé, l'aéronef étant à l'aplomb dudit sol, mais peut étonnamment détecter des obstacles présents dans une sphère fictive entourant l'aéronef. Par suite, il n'est pas nécessaire d'implémenter un système de détection dédié en plus d'un radioaltimètre.

Chaque organe principal ou secondaire peut comprendre une antenne bidirectionnelle ou un jeu d'antennes présentant une antenne émettrice et une antenne réceptrice. De plus, chaque organe principal ou secondaire est sollicité au moins une fois par le générateur-récepteur lors d'un cycle afin d'optimiser la détection des obstacles environnants.

Par suite, le générateur-récepteur émet des signaux, dirigés par le moyen de commutation vers un organe d'émission-réception suivant un cycle. L'organe d'émission-réception reçoit le cas échéant un signal réfléchi. A partir du temps de propagation, le générateur-récepteur en déduit la distance séparant l'organe d'émission-réception et l'objet ayant réfléchi le signal.

Si l'organe de commutation a mis en oeuvre l'organe principal, le radioaltimètre en déduit la hauteur de l'aéronef muni du radioaltimètre. Par contre, si l'organe de commutation a mis en oeuvre un organe secondaire, le radioaltimètre en déduit notamment la présence d'un obstacle dans le secteur balayé par l'organe secondaire activé par l'organe de commutation.

De plus, un organe d'évaluation des obstacles détectés détermine un niveau de dangerosité pour chaque obstacle détecté. Le moyen d'affichage signale alors la présence de l'obstacle le plus dangereux, à savoir l'obstacle présentant le niveau de dangerosité le plus élevée.

On note que selon le procédé explicité par la suite, il est possible de modifier le cycle de commutation des organes d'émission-réception lorsqu'un obstacle est détecté, pour surveiller plus particulièrement le secteur à risque dans lequel se trouve cet obstacle, sans pour autant limiter la détection dans ce secteur à risque.

Si plusieurs obstacles sont détectés, on peut surveiller plus particulièrement le secteur à risque dans lequel se trouve l'obstacle présentant le niveau de dangerosité le plus élevé.

Le radioaltimètre peut de plus comporter une ou plusieurs des caractéristiques qui suivent.

Selon un premier mode de réalisation, le moyen de commutation communique avec le moyen d'affichage. Le moyen d'affichage peut comprendre alors un organe de calcul pour déterminer la présence d'un obstacle et la hauteur de l'aéronef muni du radioaltimètre en fonction d'une information transmise par le moyen de commutation indiquant l'organe d'émission-réception mis en oeuvre et de la distance mesurée par le générateur-récepteur.

L'unité de contrôle peut alors sélectionner l'organe d'émission-réception à utiliser en fonction d'un cycle prédéfini ou encore d'un cycle choisi à l'aide d'un moyen de sélection.

De plus, l'unité de contrôle peut être reliée au moyen d'affichage, au générateur-récepteur ou encore au moyen de commutation pour savoir si un obstacle a réfléchi un signal émis par un organe secondaire. Dans l'affirmative, l'unité de contrôle peut modifier ledit cycle pour sélectionner plusieurs fois ledit organe secondaire durant chaque cycle.

On comprend que l'unité de contrôle peut comporter un processeur ou équivalent ainsi qu'une mémoire par exemple.

Selon un deuxième mode de réalisation, l'unité de contrôle est reliée au générateur-récepteur pour recevoir une information relative à la durée de propagation d'un signal émis par un organe secondaire qui est réfléchi par un obstacle vers cet organe secondaire, l'unité de contrôle étant reliée au moyen d'affichage pour afficher une information relative à au moins un obstacle détecté sur le moyen d'affichage secondaire.

L'unité de contrôle, de type calculateur muni d'un processeur par exemple, reçoit une information relative à la distance séparant l'organe d'émission-réception d'un objet, et connaît de fait l'organe d'émission-réception mis en oeuvre. Dès lors, l'unité de contrôle requiert l'affichage sur le moyen d'affichage secondaire d'informations relatives à un obstacle si l'organe d'émission-réception est un organe secondaire, et l'affichage sur le moyen d'affichage principal de la nouvelle hauteur mesurée si l'organe d'émission-réception est un organe principal.

Il est à noter qu'indépendamment du mode de réalisation, le moyen d'affichage principal et le moyen d'affichage secondaire peuvent représenter des zones distinctes d'un même écran, ou encore peuvent comporter des écrans distincts.

Selon un autre aspect, le radioaltimètre comporte au moins un organe de détermination de la position d'un aéronef à choisir parmi une liste incluant :
- un moyen de détection de la vitesse d'avancement d'un aéronef,
- un moyen de cartographie,
- un moyen de détection de l'altitude d'un aéronef,
- un moyen de détection de l'attitude d'un aéronef.

Par exemple, le radioaltimètre et notamment un organe d'évaluation des obstacles détectés prend en considération la vitesse d'avancement du véhicule pour estimer le niveau de dangerosité d'un obstacle, voire le temps restant avant un impact si le véhicule conserve la même trajectoire et la même vitesse d'avancement.

Selon un autre aspect, le radioaltimètre comporte un moyen de sélection manuel relié à l'unité de contrôle pour permettre à un individu de choisir un cycle parmi un catalogue prédéterminé.

Ce catalogue inclut par exemple au moins un des cycles suivants :
- un premier cycle incluant le balayage de l'organe principal et d'au moins un organe secondaire choisi parmi une pluralité d'organes secondaires,
- un deuxième cycle incluant le balayage de l'organe principal et de chaque organe secondaire, et
- un troisième cycle incluant le balayage de l'organe principal et de chaque organe secondaire, les organes secondaires détectant un obstacle étant sollicités durant chaque cycle un premier nombre de fois, les organes secondaires ne détectant pas un obstacle étant sollicités durant chaque cycle un second nombre de fois inférieur audit premier nombre de fois.

De plus, le radioaltimètre peut comporter un moyen d'alarme visuel et/ou sonore pour signaler la présence d'un obstacle, et notamment de l'obstacle le plus dangereux détecté. Le moyen d'alarme peut utiliser des alertes différentes en fonction du niveau de dangerosité de l'obstacle détecté.

Outre un radioaltimètre, l'invention vise un aéronef comportant un radioaltimètre du type décrit précédemment mesurant la hauteur de l'aéronef et détectant des obstacles autres que le sol survolé par l'aéronef dans une sphère entourant cet aéronef.

Par ailleurs, l'aéronef s'étendant longitudinalement d'une extrémité arrière vers une extrémité avant, en élévation d'une partie inférieure vers une partie supérieure, et transversalement d'un côté gauche vers un côté droit, cet aéronef étant inclus dans une sphère fictive présentant un secteur principal inférieur entre le sol et la partie inférieure de l'aéronef, au moins un secteur secondaire avant en vis-à-vis de l'extrémité avant, au moins un secteur secondaire arrière en vis-à-vis de l'extrémité arrière, au moins un secteur secondaire latéral gauche en vis-à-vis du côté gauche, au moins un secteur secondaire latéral droit en vis-à-vis du côté droit, ledit organe principal ayant pour fonction d'être dirigé selon le secteur principal inférieur, ledit radioaltimètre peut comprendre au moins :
- un organe secondaire avant pour détecter un obstacle dans le secteur secondaire avant,
- un organe secondaire arrière pour détecter un obstacle dans le secteur secondaire arrière,
- un organe secondaire latéral gauche pour détecter un obstacle dans le secteur secondaire latéral gauche,
- un organe secondaire latéral droit pour détecter un obstacle dans le secteur secondaire latéral droit.

Les différents organes secondaires sont prévus pour fonctionner à la même fréquence d'émission/réception mais pourraient également fonctionner selon des longueurs d'ondes différentes, l'organe secondaire avant pouvant fonctionner sur une plage longue par exemple alors que l'organe secondaire arrière ainsi que les organes secondaires latéraux gauche et droit pourraient fonctionner selon une plage courte.

L'invention vise aussi un procédé mis en oeuvre par un tel aéronef.

Ainsi, l'invention concerne notamment un procédé pour sécuriser un vol d'aéronef en évitant des obstacles autres que le sol survolé par l'aéronef, l'aéronef s'étendant longitudinalement d'une extrémité arrière vers une extrémité avant, en élévation d'une partie inférieure vers une partie supérieure, et transversalement d'un côté gauche vers un côté droit, une sphère fictive entourant cet aéronef comportant un secteur principal dirigé vers le sol et au moins un secteur secondaire. Au cours de ce procédé :
- on émet successivement selon un cycle donné modifiable d'une part un signal principal dans le secteur principal pour mesurer la hauteur séparant l'aéronef du sol survolé, et, d'autre part des signaux secondaires dans chacun desdits secteurs secondaires pour détecter la présence d'un obstacle dans ces secteurs secondaires,
- si on détecte un obstacle dans un secteur secondaire donné dénommé dès lors secteur à risque, on modifie ledit cycle pour augmenter le premier nombre de signaux émis dans ce secteur à risque par rapport au deuxième nombre de signaux émis vers les autres secteurs secondaires et le secteur principal,
- on établit un niveau de dangerosité de chaque obstacle détecté dans des secteurs secondaires, par exemple un niveau faible, un niveau moyen, un niveau élevé et un niveau très élevé
- on affiche la hauteur de l'aéronef sur un moyen d'affichage principal, et on affiche des informations relatives à l'obstacle détecté ayant le niveau de dangerosité le plus élevée sur un moyen d'affichage secondaire pour attirer l'attention du pilote sur un risque précis.

Ce procédé peut comporter une ou plusieurs des caractéristiques additionnelles qui suivent.

Par exemple, le cycle donné est éventuellement établi à l'aide d'un moyen de sélection manoeuvrable par le pilote de l'aéronef.

Par ailleurs, un obstacle étant détecté dans un secteur secondaire situé à l'avant de l'aéronef par rapport au sens d'avancement de cet aéronef, on établit la distance de sécurité séparant l'aéronef de l'obstacle puis le temps séparant un instant courant d'un éventuel impact avec cet obstacle, le niveau de dangerosité étant établi en fonction dudit temps ou de ladite distance.

Par exemple :
- un niveau de dangerosité faible peut correspondre à un impact susceptible de se produire dans plus de 30 secondes ou à un obstacle situé à plus de 50 mètres de l'aéronef,
- un niveau de dangerosité moyen peut correspondre à un impact susceptible de se produire dans un délai compris entre 30 secondes et 20 secondes, ou à un obstacle situé à une distance comprise entre 50 mètres et 20 mètres,
- un niveau de dangerosité élevé peut correspondre à un impact susceptible de se produire dans un délai compris entre 20 secondes et 10 secondes, ou à un obstacle situé à une distance comprise entre 20 mètres et 10 mètres,
- un niveau de dangerosité très élevé peut correspondre à un impact susceptible de se produire dans un délai inférieur à 10 secondes, ou à un obstacle situé à une distance inférieure à 10 mètres.

Plus spécifiquement, la vitesse d'avancement de l'aéronef étant inférieure à un seuil prédéterminé, le niveau de dangerosité est éventuellement établi en fonction de ladite distance de sécurité. Par contre, si la vitesse d'avancement de l'aéronef est supérieure ou égale à un seuil prédéterminé, le niveau de dangerosité est établi en fonction dudit temps.

En effet, il parait intéressant de surveiller le temps avant un possible impact selon une direction relative au sens d'avancement de l'aéronef, lorsque la vitesse d'avancement est importante, à savoir supérieure ou égale à 50 noeuds par exemple.

Par contre, à vitesse faible, la distance entre l'aéronef et l'obstacle ainsi que son évolution parait être un paramètre de surveillance intéressant.

Dès lors, un obstacle étant détectée dans un secteur secondaire latéral de la sphère situé du coté gauche ou du côté droit de l'aéronef par rapport au sens d'avancement de cet aéronef, on établit la distance séparant l'aéronef de l'obstacle, le niveau de dangerosité étant établi favorablement en fonction de ladite distance.

De plus, si l'aéronef est un aéronef muni d'une voilure tournante décrivant un cercle d'un rayon maximal donné, on établit la distance mesurée séparant un moyen d'émission-réception de l'aéronef de l'obstacle, le niveau de dangerosité est établi en fonction d'une distance de sécurité égale à la différence de ladite distance mesurée et dudit rayon.

Des alarmes distinctes peuvent aussi être émises en fonction du niveau de dangerosité de l'obstacle.

L'invention et ses avantages apparaîtront avec plus de détails dans le cadre de la description qui suit avec des exemples de réalisation donnés à titre illustratif en référence aux figures annexées qui représentent :
- la figure 1, une vue schématique d'un premier mode de réalisation,
- la figure 2, une vue schématique d'un deuxième mode de réalisation,
- les figures 3 et 4 des vues présentant l'agencement d'organes d'émission-réception sur un hélicoptère.

Les éléments présents dans plusieurs figures distinctes sont affectés d'une seule et même référence.

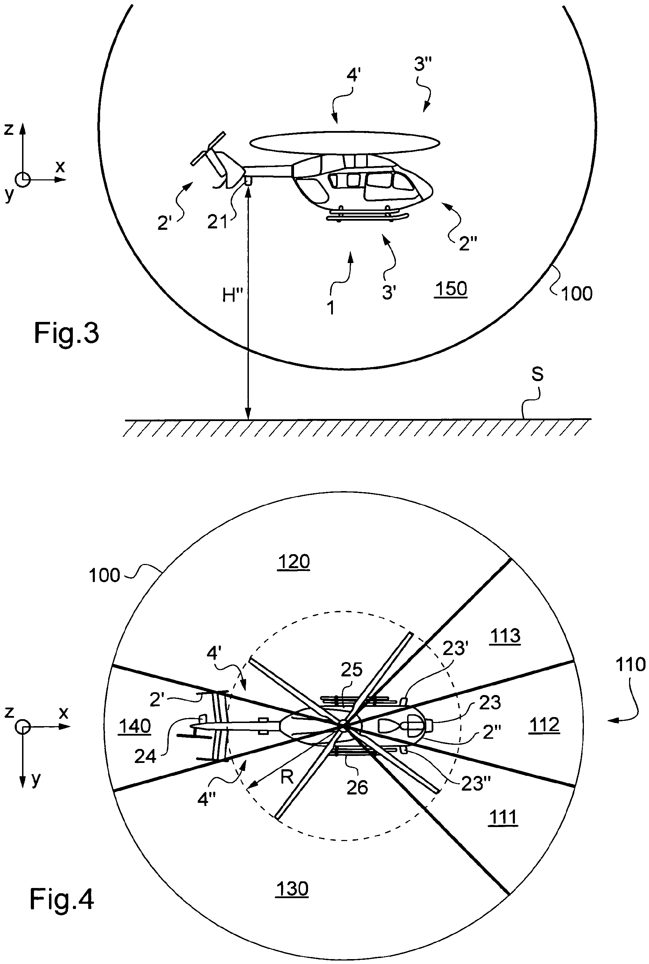

On note que trois directions X, Y et Z orthogonales les unes par rapport aux autres sont représentées sur les figures 3 à 4.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

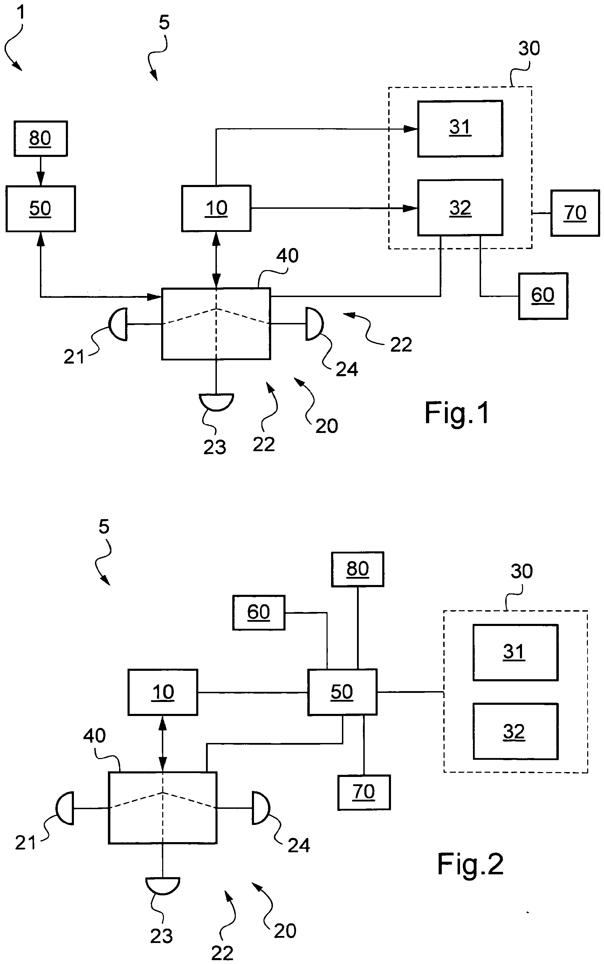

La figure 1 présente un aéronef 1, représenté schématiquement muni d'un radioaltimètre 5 selon un premier mode de réalisation de l'invention.

Indépendamment du mode de réalisation, le radioaltimètre 5 comprend un générateur-récepteur 10 de signaux, de type onde radioélectrique par exemple. Ce générateur-récepteur 10 est par exemple du type présent dans des radioaltimètres antérieurs à l'invention.

Le générateur-récepteur 10 génère alors un signal et mesure le temps mis par ce signal pour revenir vers l'aéronef après avoir été réfléchi par un objet. En tenant compte de la vitesse de propagation du signal qui est connue et invariante, le générateur-récepteur 10 détermine la distance séparant l'aéronef 1 de l'objet, à savoir le sol ou un obstacle distinct du sol par exemple.

Pour émettre le signal généré par le générateur-récepteur 10 et recevoir le signal réfléchi résultant, le radioaltimètre 5 comprend un moyen d'émission-réception 20 relié indirectement au générateur-récepteur 10.

Le moyen d'émission-réception comporte au moins un organe principal 21 d'émission-réception pour déterminer la hauteur de l'aéronef, et au moins un organe secondaire 22 d'émission-réception pour déterminer la présence d'un obstacle autre que le sol dans une sphère fictive entourant l'aéronef 1.

Chaque organe du moyen d'émission-réception, à savoir un organe principal 21 ou un organe secondaire 22, peut comporter soit une antenne bidirectionnelle soit un jeu d'antennes comprenant une antenne d'émission et une antenne de réception.

En référence à la figure 3, l'aéronef s'étend longitudinalement le long de son axe de roulis d'une extrémité arrière 2' vers une extrémité avant 2", transversalement le long de son axe de tangage d'un côté gauche 4' vers un côté droit 4" et en élévation le long de son axe de lacet d'une partie inférieure 3' vers une partie supérieure 3".

Cet aéronef évolue en vol au sein d'une sphère 100 fictive pouvant être découpée en une pluralité de secteurs.

Dès lors, l'organe principal 21 est avantageusement agencé sur la partie inférieure 3', sous la poutre de queue d'un hélicoptère par exemple, pour pouvoir diriger un signal vers le secteur principal 150 de la sphère en regard du sol S.

En référence à la figure 4, l'aéronef peut éventuellement comporter un organe secondaire avant pour détecter un obstacle dans un secteur secondaire avant 110 en vis-à-vis de l'extrémité avant 2" de l'aéronef. Par exemple, trois organes secondaires avant 23, 23', 23" sont disposés dans trois sous-secteurs 111, 112, 113 du secteur secondaire avant. Plus spécifiquement, deux organes secondaires avant 23', 23" sont écartés de 30 degrés par rapport au plan longitudinal de symétrie antéropostérieur de l'aéronef, le troisième organe secondaire avant 23 étant disposé dans ledit plan.

De plus, le radioaltimètre peut comprendre un organe secondaire arrière 24 pour détecter un obstacle dans le secteur secondaire arrière 140 en vis-à-vis de l'extrémité arrière 2', un organe secondaire latéral gauche 25 pour détecter un obstacle dans le secteur secondaire latéral gauche 120 en vis-à-vis du côté gauche 4' de l'aéronef, et un organe secondaire latéral droit 26 pour détecter un obstacle dans le secteur secondaire latéral droit 130 en vis-à-vis du côté droit 4".

En référence à la figure 1, le radioaltimètre 5 possède alors un moyen de commutation 40 interposé entre le générateur-récepteur 10 et les organes principal 21 et secondaires 22 d'émission-réception du moyen d'émission-réception 20, ainsi qu'une unité de contrôle 50 reliée au moyen de commutation 40.

L'unité de contrôle 50 contrôle alors le moyen de commutation 40 afin que le moyen de commutation 40 mette en relation successivement les organes principal 21 et secondaires 22 et le générateur-récepteur 10 selon un cycle modifiable.

Le moyen de commutation 40 peut être un système de commutation entre des lignes coaxiales d'antennes du moyen de réception-émission 20. Ce moyen de commutation 40 comporte éventuellement des relais coaxiaux, les différents contacts électriques étant soigneusement vérifiés pour ne pas modifier les caractéristiques desdites lignes coaxiales.

L'unité de contrôle peut comprendre un processeur et/ou une mémoire dans laquelle sont stockés une pluralité de cycles distincts, chaque cycle étant modifiable en vol en fonction des obstacles éventuellement détectés. L'unité de contrôle peut posséder une carte électronique envoyant une trame numérique vers le moyen de commutation pour basculer d'un organe de réception-émission à un autre selon un cycle donné modifiable.

En effet, si un obstacle est détecté, à savoir si un signal réfléchi parvient à un organe secondaire donné, l'unité de contrôle 50 peut modifier le cycle afin que l'organe secondaire donné soit utilisé plus souvent que les autres organes secondaires et que l'organe principal durant un cycle.

L'unité de contrôle 50 peut coopérer avec un organe de détermination 60 de la position de l'aéronef à choisir par exemple parmi une liste incluant un moyen de détection de la vitesse d'avancement de l'aéronef, un moyen de cartographie, un moyen de détection de l'altitude d'un aéronef, un moyen de détection de l'attitude d'un aéronef. La fréquence selon laquelle un organe secondaire est sollicité durant un cycle peut dépendre des informations transmises par l'organe de détermination.

A titre d'exemple, il est concevable de solliciter un grand nombre de fois un organe secondaire lorsque l'aéronef se déplace à grande vitesse.

De plus, l'unité de contrôle 50 peut coopérer avec un moyen de sélection 80 manoeuvrable par un individu, tel qu'un pilote, pour sélectionner un cycle modifiable préféré à choisir parmi un catalogue prédéterminé.

Ce catalogue peut inclure un premier cycle incluant le balayage de l'organe principal et d'au moins un organe secondaire choisi parmi une pluralité d'organes secondaires.

Par exemple, l'aéronef peut comporter un organe secondaire avant pour détecter un obstacle situé en vis-à-vis de l'extrémité avant de cet aéronef, un organe secondaire latéral gauche 25 pour détecter un obstacle situé à gauche de l'aéronef et un organe secondaire latéral droit pour détecter un obstacle situé à droite de l'aéronef. Si durant une mission de sauvetage en montagne par exemple, la paroi de la montagne se trouve à gauche de l'aéronef, le pilote peut choisir un cycle mettant uniquement en oeuvre l'organe principal et l'organe secondaire gauche.

Le catalogue peut aussi comprendre un deuxième cycle incluant le balayage de l'organe principal et de chaque organe secondaire.

De plus, le catalogue peut posséder un troisième cycle incluant le balayage de l'organe principal et de chaque organe secondaire, les organes secondaires détectant un obstacle étant sollicités durant chaque cycle un premier nombre de fois, les organes secondaires ne détectant pas un obstacle étant sollicités durant chaque cycle un second nombre de fois inférieur au premier nombre de fois. On privilégie alors les organes secondaires dirigés vers un potentiel danger, sans pour autant écarter les autres organes secondaires susceptibles à leur tour de détecter un obstacle.

Par ailleurs, le radioaltimètre comprend un organe d'affichage 30 muni d'un moyen d'affichage principal 31 affichant la hauteur de l'aéronef et d'un moyen d'affichage secondaire 32 affichant des informations relatives à un obstacle distinct du sol, au dessus duquel l'aéronef évolue.

Par exemple, le moyen d'affichage principal 31 et le moyen d'affichage secondaire 32 représentent des portions distinctes d'un même écran. Un affichage tridimensionnel montrant conjointement la hauteur de l'aéronef et au moins un obstacle détecté est aussi envisageable.

Selon une autre variante, le moyen d'affichage principal 31 comprend un premier écran. Dès lors, le moyen d'affichage secondaire comprend au moins un écran, voir un écran par organe secondaire par exemple.

Selon un autre aspect, le radioaltimètre peut comprendre un moyen d'alarme 70. Ce moyen d'alarme peut comporter des alarmes sonores et/ou visuelles, pouvant varier en fonction du niveau de dangerosité associé à un obstacle.

En référence à la figure 1, selon un premier mode de réalisation, le moyen d'affichage est relié au moyen de commutation 40, au générateur-récepteur 10, à l'organe de détermination 60 et au moyen d'alarme 70.

Le moyen d'affichage comprend alors un moyen de calcul de type processeur ou carte électronique pour déterminer les informations relatives à un obstacle ou au sol le cas échéant, tel que le temps séparant un instant courant d'un éventuel impact, la distance séparant l'aéronef d'un obstacle, l'organe secondaire ayant détecté un obstacle. A cet effet, le moyen de calcul fait appel au générateur-récepteur 10 qui indique qu'un signal a parcouru une distance mesurée. De plus, le moyen de calcul communique avec le moyen de commutation 40 qui lui indique quel organe du moyen de d'émission-réception 20 a été utilisé et par suite dans quel secteur ledit signal a été émis puis réfléchi, voire avec l'organe de détermination pour avoir des informations relatives à l'aéronef par exemple.

En référence à la figure 2, selon un deuxième mode de réalisation, l'unité de contrôle est notamment reliée au moyen d'affichage 30, au moyen de commutation 40, au générateur-récepteur 10, aux moyen de détection de l'organe de détermination 60 et au moyen d'alarme 70.

Indépendamment du mode de réalisation, le radioaltimètre 5 met en oeuvre un procédé pour sécuriser le vol d'un aéronef afin d'éviter que cet aéronef heurte le sol ou un obstacle autre que le sol.

Selon une première étape de ce procédé, le radioaltimètre 5 émet des signaux selon un cycle donné dans une pluralité de secteurs d'une sphère 100 fictive entourant cet aéronef.

A chaque cycle, le radioaltimètre 5 émet successivement un signal dans un secteur principal pour déterminer la hauteur de l'aéronef par rapport au sol survolé, à savoir le sol à l'aplomb duquel se trouve l'aéronef, et un signal dans au moins un secteur secondaire de la sphère 100 pour détecter la présence d'obstacles potentiellement dangereux pour la sécurité de l'aéronef.

Selon une deuxième étape du procédé, si un obstacle est détecté dans un secteur secondaire dénommé dès lors secteur à risque par commodité, on modifie le cycle pour augmenter le premier nombre de signaux émis dans ce secteur à risque par rapport au deuxième nombre de signaux émis vers les autres secteurs secondaires et le secteur principal. Par exemple, on émet deux signaux par cycle dans le secteur à risque et un seul signal dans les autres secteurs.

Selon une troisième étape, on affiche la hauteur H de l'aéronef sur un moyen d'affichage principal 31. De plus, on affiche des informations relatives à au moins un obstacle détecté sur un moyen d'affichage secondaire, par exemple la distance séparant l'aéronef de l'obstacle, le temps séparant l'instant courant d'un éventuel impact lorsque l'organe secondaire a permis la détection de l'obstacle, la représentation tridimensionnelle de l'obstacle par rapport à l'aéronef.

De plus, un organe d'évaluation des obstacles détectés établit un niveau de dangerosité des obstacles, pour afficher ce niveau de dangerosité. Selon le mode de réalisation, l'organe d'évaluation peut être un organe indépendant. Cet organe d'évaluation peut aussi comprendre le processeur de l'unité de contrôle ou le moyen de calcul de l'unité d'affichage.

Selon une réalisation préférée, on affiche uniquement les informations relatives à l'obstacle présentant le niveau de dangerosité le plus élevé pour minimiser les informations transmises au pilote afin d'améliorer son temps de réaction.

De plus, durant la troisième étape, il est possible de déclencher une alarme, cette alarme pouvant prendre des aspects différents suivant le niveau de dangerosité.

Par exemple, le moyen d'alarme peut comporter un indicateur affichant un plot lumineux, fixe ou clignotant, lorsqu'un obstacle présente un niveau de dangerosité faible. Pour un niveau de dangerosité moyen, le moyen d'alarme émet en plus dudit plot lumineux une alarme sonore faible dans le casque du pilote, cette alarme sonore augmentant en intensité pour des niveaux de dangerosité élevé et très élevé. En plus du niveau sonore croissant avec le niveau de dangerosité de l'obstacle, l'alarme sonore peut être discontinue lorsque lorsqu'un obstacle présente un niveau de dangerosité faible puis peut s'accélérer lorsque le niveau de dangerosité de l'obstacle augmente jusqu'à correspondre à un signal sonore continu.

On note qu'en l'absence d'obstacle hors sol détecté, chaque organe secondaire 22 et l'organe principal sont par exemple sollicités une fois par cycle.

Par contre, si un obstacle est détecté dans un secteur à risque, ce secteur à risque peut être sollicité deux fois par cycle pour un niveau de dangerosité faible, trois fois par cycle pour un niveau de dangerosité moyen, quatre fois par cycle pour un niveau de dangerosité élevé et six fois par cycle pour un niveau de dangerosité très élevé.

On comprend que les valeurs données sont fournies à titre indicatif.

Par ailleurs, pour déterminer le niveau de dangerosité d'un obstacle détecté dans un secteur secondaire avant, on établit la distance de sécurité séparant l'aéronef de l'obstacle puis le temps avant un éventuel impact avec cet obstacle, le niveau de dangerosité étant établi soit en fonction dudit temps soit en fonction de ladite distance. Le temps avant un éventuel impact avec cet obstacle peut être obtenu à l'aide de la vitesse d'avancement de l'aéronef vers l'obstacle.

Lorsque la vitesse d'avancement de l'aéronef est inférieure à un seuil prédéterminé alors le niveau de dangerosité est par exemple établi en fonction de ladite distance de sécurité. Par contre, lorsque la vitesse d'avancement de l'aéronef est supérieure ou égale au seuil prédéterminé, le niveau de dangerosité est établi en fonction dudit temps.

Durant un tel vol d'avancement, le cycle peut éventuellement solliciter l'organe principal et uniquement les organes secondaires en vis-à-vis du secteur secondaire avant.

En outre, si un obstacle est détecté dans un secteur secondaire latéral 120, 130 situé du coté gauche 4' ou du côté droit 4" de l'aéronef 1 par rapport au sens d'avancement de cet aéronef, le niveau de dangerosité est établi en fonction de la distance séparant l'aéronef de l'obstacle.

En outre, lorsque la distance séparant l'aéronef de l'obstacle est utilisée, si l'aéronef est muni d'une voilure tournante décrivant un cercle d'un rayon donné R conformément à la figure 4, le niveau de dangerosité est établi en fonction d'une distance de sécurité égale à la différence de la distance mesurée séparant un moyen d'émission-réception de l'aéronef de l'obstacle et du rayon R.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Radioaltimètre (5) muni d'un générateur-récepteur (10) de signaux ainsi que d'un moyen d'émission-réception (20) d'un signal relié au générateur-récepteur (10) et d'un organe d'affichage (30), ledit moyen d'émission-réception (20) comprenant un organe principal (21) d'émission-réception pour envoyer un signal vers le sol (S) survolé afin de déterminer la hauteur (H) séparant ledit organe principal (21) dudit sol (S), ledit organe d'affichage (30) ayant un moyen d'affichage principal (31) de ladite hauteur (H),
**caractérisé en ce que** ledit radioaltimètre (5) comporte un moyen de commutation (40) ainsi qu'une unité de contrôle (50) et un moyen d'affichage secondaire (32) dudit organe d'affichage (30), le moyen d'émission-réception (20) comportant au moins un organe secondaire (22) d'émission-réception pour détecter un obstacle autre que le sol (S), ledit organe principal (21) et chaque organe secondaire (22) étant reliés au moyen de commutation (40), ledit radioaltimètre comportant un organe d'évaluation des obstacles détectés déterminant un niveau de dangerosité de chaque obstacle détecté, ledit organe d'affichage (30) comprenant un moyen d'affichage secondaire (32) pour afficher au moins une information relative à l'obstacle détecté présentant le niveau de dangerosité le plus élevé, ladite unité de contrôle (50) étant reliée au moyen de commutation (40) pour mettre en liaison ledit organe principal (21) et chaque organe secondaire (22) avec ledit générateur-récepteur (10) de signaux selon un cycle et pour modifier ledit cycle si un obstacle est détecté.

2. Radioaltimètre selon la revendication 1,
**caractérisé en ce que**, ladite unité de contrôle (50) étant reliée au générateur-récepteur (10) pour recevoir une information relative à la durée de propagation d'un signal émis par un organe secondaire (22) qui est réfléchi par un obstacle vers cet organe secondaire (22), ladite unité de contrôle (50) est reliée au moyen d'affichage (30) pour afficher une information relative à au moins un obstacle détecté sur le moyen d'affichage secondaire (32).

3. Radioaltimètre selon l'une quelconque des revendications 1 à 2,
**caractérisé en ce qu'**il comporte au moins un organe de détermination (60) de la position d'un aéronef à choisir parmi une liste incluant :
- un moyen de détection de la vitesse d'avancement d'un aéronef,
- un moyen de cartographie,
- un moyen de détection de l'altitude d'un aéronef,
- un moyen de détection de l'attitude d'un aéronef.

4. Radioaltimètre selon l'une quelconque des revendications 1 à 3,
**caractérisé en ce qu'**il comporte un moyen de sélection (80) manuel relié à l'unité de contrôle (50) pour permettre à un individu de choisir ledit cycle parmi un catalogue prédéterminé.

5. Radioaltimètre selon la revendication 4,
**caractérisé en ce que** ledit catalogue inclut au moins un des cycles suivants :
- un premier cycle incluant le balayage de l'organe principal (21) et d'au moins un organe secondaire choisi parmi une pluralité d'organes secondaires (23, 23', 23", 24, 25, 26).
- un deuxième cycle incluant le balayage de l'organe principal (21) et de chaque organe secondaire,
- un troisième cycle incluant le balayage de l'organe principal (21) et de chaque organe secondaire, les organes secondaires détectant un obstacle étant sollicités durant chaque cycle un premier nombre de fois, les organes secondaires ne détectant pas un obstacle étant sollicités durant chaque cycle un second nombre de fois inférieur audit premier nombre de fois

6. Radioaltimètre selon l'une quelconque des revendications 1 à 5,
**caractérisé en ce qu'**il comporte un moyen d'alarme (70) pour signaler la présence d'un obstacle.

7. Aéronef (1),
**caractérisé en ce qu'**il comporte un radioaltimètre (5) selon l'une quelconque des revendications précédentes mesurant la hauteur (H) de l'aéronef (1) et détectant des obstacles autres que le sol survolé par l'aéronef, dans une sphère (100) entourant cet aéronef (1).

8. Aéronef selon la revendication 7,
**caractérisé en ce que**, ledit aéronef (1) s'étendant longitudinalement d'une extrémité arrière (2') vers une extrémité avant (2"), en élévation d'une partie inférieure (3') vers une partie supérieure (3"), et transversalement d'un côté gauche (4') vers un côté droit (4"), ledit aéronef (1) étant inclus dans une sphère (100) fictive présentant un secteur principal inférieur (150) entre le sol et la partie inférieure (3') de l'aéronef (1), au moins un secteur secondaire avant (110) en vis-à-vis de l'extrémité avant (2"), au moins un secteur secondaire arrière (140) en vis-à-vis de l'extrémité arrière (2'), au moins un secteur secondaire latéral gauche (120) en vis-à-vis du côté gauche (4'), au moins un secteur secondaire latéral droit (130) en vis-à-vis du côté droit (4"), ledit organe principal (21) ayant pour fonction d'être dirigé selon le secteur principal inférieur (150), ledit radioaltimètre (10) comprend au moins :
- un organe secondaire avant (23, 23', 23") pour détecter un obstacle dans le secteur secondaire avant (110),
- un organe secondaire arrière (24) pour détecter un obstacle dans le secteur secondaire arrière (140),
- un organe secondaire latéral gauche (25) pour détecter un obstacle dans le secteur secondaire latéral gauche (120),
- un organe secondaire latéral droit (26) pour détecter un obstacle dans le secteur secondaire latéral droit (130).

9. Procédé pour sécuriser un vol d'un aéronef (1) en évitant des obstacles autre que le sol survolé par l'aéronef, ledit aéronef (1) s'étendant longitudinalement d'une extrémité arrière (2') vers une extrémité avant (2"), en élévation d'une partie inférieure (3') vers une partie supérieure (3"), et transversalement d'un côté gauche (4') vers un côté droit (4"), une sphère (100) fictive entourant ledit aéronef (1) comportant un secteur principal (150) dirigé vers le sol et au moins un secteur secondaire (110, 120, 130, 140), au cours duquel :
- on émet successivement selon un cycle donné modifiable d'une part un signal principal dans le secteur principal (150) pour mesurer la hauteur (H) séparant l'aéronef (1) du sol (S) survolé, et, d'autre part des signaux secondaires dans chacun desdits secteurs secondaires pour détecter la présence d'un obstacle dans ces secteurs secondaires,
- si on détecte un obstacle dans un secteur secondaire donné dénommé dès lors secteur à risque, on modifie ledit cycle pour augmenter le premier nombre de signaux émis dans ledit secteur à risque par rapport au deuxième nombre de signaux émis vers les autres secteurs secondaires et le secteur principal,
- on établit un niveau de dangerosité de chaque obstacle détecté dans des secteurs secondaires,
- on affiche la hauteur (H) de l'aéronef (1) sur un moyen d'affichage principal (31), et on affiche des informations relatives à l'obstacle détecté ayant le niveau de dangerosité le plus élevée.

10. Procédé selon la revendication 9,
**caractérisé en ce que** ledit cycle donné est établi à l'aide d'un moyen de sélection (80) manoeuvrable par le pilote de l'aéronef.

11. Procédé selon la revendication 9,
**caractérisé en ce que**, un obstacle étant détecté dans un secteur secondaire avant (110) situé à l'avant de l'aéronef (1) par rapport au sens d'avancement de cet aéronef (1), on établit la distance de sécurité séparant l'aéronef de l'obstacle puis le temps avant un éventuel impact avec ledit obstacle, le niveau de dangerosité étant établi en fonction dudit temps ou de ladite distance.

12. Procédé selon la revendication 11,
**caractérisé en ce que** lorsque la vitesse d'avancement de l'aéronef est inférieure à un seuil prédéterminé alors le niveau de dangerosité est établi en fonction de ladite distance de sécurité ; et **en ce que** lorsque la vitesse d'avancement de l'aéronef est supérieure ou égale au seuil prédéterminé, le niveau de dangerosité est établi en fonction dudit temps.

13. Procédé selon l'une quelconque des revendications 9 à 12,
**caractérisé en ce que**, un obstacle étant détectée dans un secteur secondaire latéral (120, 130) de ladite sphère (100) situé du coté gauche (4') ou du côté droit (4") de l'aéronef (1) par rapport au sens d'avancement de cet aéronef, on établit la distance séparant l'aéronef de l'obstacle, le niveau de dangerosité étant établi en fonction de ladite distance.

14. Procédé selon l'une quelconque des revendications 9 à 13,
**caractérisé en ce que**, l'aéronef étant un aéronef à voilure tournante décrivant un cercle d'un rayon donné (R), on établit la distance mesurée séparant un moyen d'émission-réception de l'aéronef de l'obstacle, le niveau de dangerosité étant établi en fonction d'une distance de sécurité égale à la différence de ladite distance mesurée et dudit rayon (R).
